# EUROPEAN PATENT SPECIFICATION

(11) **EP 3 296 874 B1**
(45) Date of publication and mention of the grant of the patent: **25.08.2021**
(21) Application number: 16189219.5
(22) Date of filing: 16.09.2016
(51) Int. Cl.: G06F 11/10

(54) **APPARATUS AND ASSOCIATED METHOD**
VORRICHTUNG UND ZUGEHÖRIGES VERFAHREN
APPAREIL ET PROCÉDÉ ASSOCIÉ

(43) Date of publication of application: 21.03.2018
(73) Proprietor: NXP B.V., 5656 AG Eindhoven (NL)
(72) Inventor: Schat, Jan-Peter, Redhill, Surrey RH1 1QZ (GB)
(74) Representative: Hardingham, Christopher Mark

(56) References cited:
- WO-A1-2014/072770
- US-A1- 2010 269 004
- US-A1- 2016 266 836
- None

## Description

The present disclosure relates to an apparatus configured for register contents integrity testing of a register bank.

A register bank may store parameters for use by an electronic device. The checking of the parameters in the register bank may be desirable.

US 2016/0266836 discloses a system and method for configuring a plurality of configurable registers in a programmable digital processing engine of a network device. Therein one or more slave configuration controllers (SCC) are utilized to configure a large number of configurable registers in a programmable engine, wherein each SCC is used to configure a plurality of configurable registers, which are organized in multiple configuration groups. The configurable registers in each configuration group are connected in a looped one-way daisy chain. During its operation, each of the slave configuration controllers is configured to receive instructions from a user via a master configuration controller (MCC), performs read or write operations on the configurable registers of one of the configuration groups as designated by the instructions from the user. Here, each of these configurable registers is equipped with an error-detecting circuit to detect dynamic soft errors; and any detected error is promptly reported back to the user through its SCC and the corresponding MCC so that the user is aware of the error at run-time.

The invention is defined by the appended independent claims.

According to a first aspect of the present disclosure there is provided an apparatus comprising:
a register bank comprising at least one chain of registers comprising a plurality of registers serially connected in a chain, each register of the chain of registers configured to store a parameter in use, the or each chain of registers having an input node at a first end of the chain and an output node at an, opposed, second end of the chain, the register bank including a scan chain arrangement configured to provide for sequential output, at the output node, of the parameters stored in the registers of the chain by way of sequentially shifting the parameters stored in each register of the chain to an adjacent register in the chain in a direction of the output node;
a feedback arrangement configured such that each parameter provided at the output node is fed back to the input node of that chain thereby providing for restoration of the parameters stored in the chain of registers once the scan chain arrangement has provided for output all of the parameters of the chain; and
a checksum determination element configured to calculate a checksum upon a plurality of the parameters of the chain(s) of registers received from the output node by the scan chain arrangement and comprising a comparator configured to compare the checksum to a previously calculated checksum stored in a memory of the checksum determination element for identification of changes to the parameters of the at least one chain of registers.

In one or more embodiments, the checksum determination element is configured to provide for communication of said checksum to a hypervisor for determination of a change in the checksum from a previously calculated checksum.

In one or more embodiments, the checksum determination element is configured to compare a calculated checksum with a previously calculated checksum for determination of a change to the parameters stored in the at least one chain of registers and, at least on detection of a change to the checksum, provide for sending of signalling to a hypervisor.

In one or more embodiments, the apparatus is configured to determine the occurrence of a single event upset based on the checksum.

In one or more embodiments, the apparatus includes at least one register controlled block comprising an electronic device configured to perform a predetermined task based on the parameters stored in at least one or more of the registers of the at least one chain of registers.

In one or more embodiments, the register bank includes a plurality of chains of registers, the plurality of chains of registers connected together in parallel and wherein the scan chain arrangement is configured to provide a plurality of output signals at the output nodes comprising the parameters of the registers of each of the plurality of chains of registers.

In one or more embodiments, the plurality of scan chains have the same length in terms of the number of registers therein.

In one or more embodiments, the registers comprise one or more of flip-flops, latches and dynamic storage elements.

In one or more embodiments, the scan chain arrangement is configured to receive a clock signal for sequential output of the parameters of the at least one chain of registers.

In one or more embodiments, the checksum determination element is configured to determine one or more of;
a checksum for each chain of registers; and
a checksum for the registers of a plurality of chains of registers.

In one or more embodiments, the apparatus is configured to, on receipt of a register contents integrity test signal, reset the checksum determination element for calculation of a checksum based on current parameters of the register bank and initiate the scan chain arrangement for providing, sequentially, the parameters of the at least one chain of registers to the scan chain arrangement.

In one or more embodiments, the apparatus is configured to provide an application mode in which the parameters of the registers are provided for control of one or more electronic devices; and a register contents integrity test mode in which the scan chain arrangement is configured to output the parameters for calculation of the checksum by the checksum determination element.

In one or more embodiments, the apparatus includes a register write element configured to provide for writing of parameters to the registers of the at least one chain of registers, the register write element configured to write to the registers without use of the scan chain arrangement.

In one or more embodiments, the electronic device comprises one or more of;
an automotive electronic device;
an automotive driver assistance electronic device;
an automotive based radar device;
an interface for manipulation of data passing through the interface;
an analogue electronic device such as an amplifier;
an analogue / mixed signal block comprising one or more of an analogue to digital convertor, a phase locked loop and a digital to analogue convertor;
a state machine;
a decimation filter;
an encoder;
a decoder;
an encryption element;
a decryption element and;
an error detection / correction element.

According to a second aspect of the disclosure we provide a method for a register bank comprising at least one chain of registers the or each chain of registers comprising a plurality of registers serially connected in a chain, each register of the chain of registers configured to store a parameter in use, the chain of registers having an input node at a first end of the chain and an output node at an, opposed, second end of the chain,
providing for sequential output, at the output node, of the parameters stored in the registers of the chain by way of sequentially shifting the parameters stored in each register of the chain to an adjacent register in the chain in a direction of the output node;
feeding back each parameter provided at the output node to the input node thereby providing for restoration of the parameters stored in the chain of registers once all of the parameters of the chain have been output; and
calculating a checksum upon a plurality of the parameters of the chain of registers received from the output node, and comparing the checksum to a previously calculated checksum for identification of changes to the parameters of the at least one chain of registers.

In one or more embodiments, the method include calculating a further checksum at a later time and comparing the checksum with the further checksum to determine the occurrence of a change in the parameters of the plurality of registers.

According to an aspect of the disclosure we provide a system comprising the apparatus and a hypervisor, wherein the apparatus is controlled by the hypervisor, the hypervisor configured to switch the apparatus between the application mode and the register content integrity test mode, wherein during the register content integrity test mode, the apparatus is configured to send the checksum determined by the checksum determination element to the hypervisor and, based on a determination by the hypervisor that the checksum has unexpectedly changed from a previously calculated checksum, the hypervisor configured to provide for writing of one or more parameters to the registers.
According to a third aspect of the disclosure we provide an electronic device including the apparatus of the first aspect.

In one or more embodiments, the electronic device comprises one of a driver assistance electronic device, a radar device, a sensor, automotive communication device, a mobile phone, an aircraft control system, a safety device, a communication device and a security device.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

One or more embodiments will now be described by way of example only with reference to the accompanying drawings in which:
Figure 1 shows an example embodiment of an apparatus comprising a register bank;
Figure 2 shows a more complete view of the example apparatus of Figure 1 including a register controlled block;
Figure 3 shows a flowchart illustrating an example method; and
Figure 4 shows a flowchart illustrating an example method.

The functionality of electronic devices may be controlled by parameters stored in registers. Typically, an electronic device may include many settings requiring many registers in which to store the parameters. The reliability of the data stored in the registers is important as it may affect the operation of the electronic device. The integrity of the registers and the parameters stored therein may be particularly important when the electronic device comprises a safety-critical electronic device. An example of such a safety-critical electronic device may be a driver assistance electronic device (or circuitry or a module of the same) for providing at least partial control of an automobile and/or assistance to a driver.

While this embodiment may relate to an automotive based electronic device, the determination of unintended changes to parameters in a register bank may be applicable to register banks in general for any particular use. Examples of electronic devices that may use such a register bank include an interface for manipulation of data passing through the interface; an analogue electronic device such as an amplifier; an analogue / mixed signal block comprising one or more of an analogue-to-digital convertor, a phase locked loop and a digital to analogue convertor; a state machine; a decimation filter; an encoder; a decoder; an encryption element; a decryption element; and an error detection / correction element. Each of the above listed devices may require or operate based on one or more settings that are defined by the parameters stored in the registers. For example, the action of a filter to filter an input signal and generate an output signal may be defined by the parameters.

The registers may be provided in banks comprising at least 500, 1000, 2000, 5000, 10000 or more registers. Each registers may comprise a flip-flop, latch, RAM cell, dynamic storage element such as a capacitor or other data storage element.

The function of an electronic device can be disturbed by unintended changes to the parameters stored in the register bank that are used by the electronic device to perform its function.

It may be desirable to determine the occurrence of Single Even Upsets (SEUs), also known as soft errors or transient faults. These SEUs may be due to cosmic rays disrupting the contents of one or more of the registers. SEUs usually flip the contents of a single storage element like a flip-flop, latch, RAM cell or dynamic storage element until the state of this storage element is re-written. The effect of an SEU is thus usually limited in time.

In safety-critical applications, the possibility of the occurrence of an SEU may require measures to detect and mitigate possible impairments caused by SEUs.

Automotive standards such as ISO 26262 require manufacturers to prove that a certain percentage of safety-critical SEUs are detected and mitigated. This percentage is called "Diagnostic Coverage" and must be at least 90% to 99%, depending on the safety level of the device (ASIL, Automotive Safety Integrity Level). An apparatus configured to detect SEUs with a high diagnostic coverage, and an easy way to prove this high diagnostic coverage may be advantageous to prove the ASIL level claimed for a system.

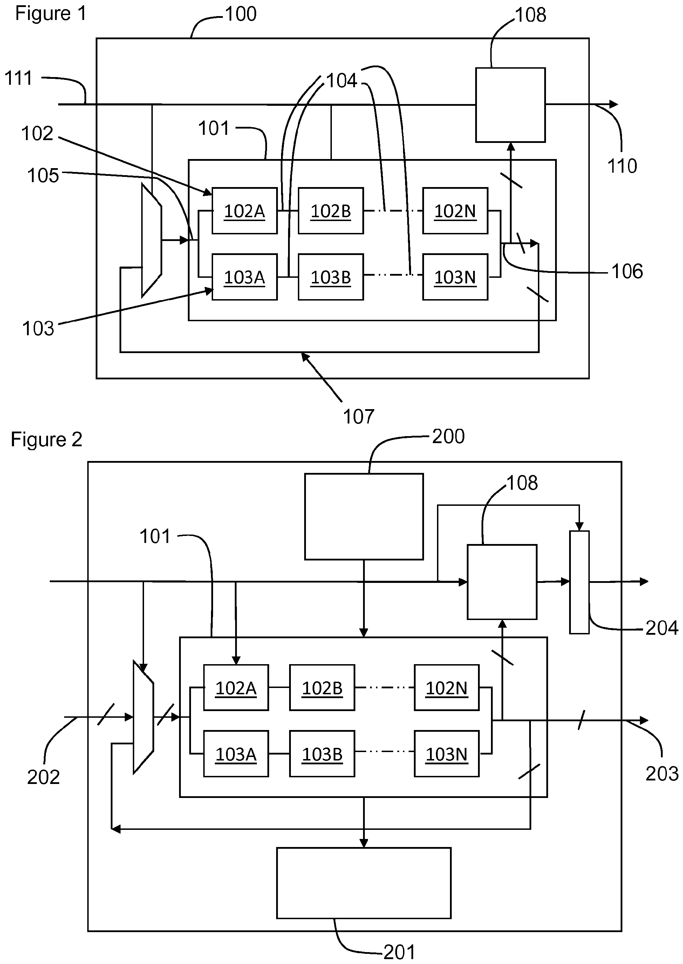

Figure 1 shows an apparatus 100 comprising a register bank 101. The register bank includes a plurality of registers 102A-N, 103A-N for storing parameters for use by an electronic device that connects to the register bank 101.

The register bank 101 comprises at least one chain of registers and in this example two chains are provided comprising a first chain 102 and a second chain 103. Each chain of registers 102, 103 comprises a plurality of registers serially connected in a chain-like manner. The first chain comprises registers 102A, 102B and so forth until 102N. The second chain comprises registers 103A, 103B and so forth until 103N. It will be appreciated that the chains of registers 102, 103 may be of any length depending on the number of parameters required to be stored. In this example, the first and second chains of registers 102, 103 are connected in parallel and include the same number of registers. Each chain is formed by the registers being connected together in series by logic elements 104, which collectively form, in part, a scan chain arrangement. The one or more chains of registers have input nodes 105 at a first end of the chain 102, 103 and output nodes 106 at an, opposed, second end of the chain 102, 103. In this example, in the figures, the input node 105 and the output node 106 is shown as being shared by the plurality of chains of registers for simplicity but, in fact, each chain of registers 102, 103 have their own input and output node 105, 106. In other examples, one or more of the input nodes and output nodes for a plurality of chains of registers may be shared and the signals multiplexed and de-multiplexed accordingly. However, in this example, the output from the scan chain arrangement is the parameters from the M chains of registers over M data lines (from M output nodes).

The register bank including a scan chain arrangement, embodied as the hardware logic elements 104, configured to provide for sequential output, at the output nodes 105, of the parameters stored in the registers of the chain by way of sequentially shifting the parameters stored in each register 102A-N, 103A-N of the chain 102, 103 to an adjacent register in the chain in a direction of the output nodes 106. As each parameter reaches the final registers 102N, 103N in the chain it is then output from the chain. In this example, the register bank 101 includes a plurality of chains of registers and the scan chain arrangement is configured to provide an output signal at the output nodes 106 comprising the parameters of the registers of each of the plurality of chains of registers. A hardware based scan chain arrangement may provide for efficient output of the parameters.

The scan chain arrangement is not shown in detail as such structures are known to those skilled in the art. However, in principle, the scan chain arrangement may provide a scan process of all the registers by performing a plurality of shift actions such that the parameters of each register is shifted along the chain to be output at the output node after at least a number of shift actions equal to the number of registers in the chain. The scan chain arrangement includes the logic elements 104 between the registers providing for shifting of a parameter stored in a first register, register 102A for example, to an adjacent register, register 102B for example, such that all the parameters in all of the registers of the chain move along the chain from register to adjacent register until they are output at the output nodes 106. The scan chain arrangement typically receives a clock signal to synchronise the shifting of parameters along the chain of registers. The scan chain arrangement therefore performs a plurality of shift actions, which may be equal to the number of registers in the chain in order to provide for output of every parameter stored in the registers of the chain.

The apparatus 100 of the example further includes a feedback arrangement 107 configured such that each parameter provided at the output nodes 106 is fed back to the input nodes 105 thereby providing for restoration of the parameters stored in the chain of registers 102, 103 once the scan chain arrangement has provided for output of all of the parameters of the chain and completed the scan process. Thus, as the action of the scan chain arrangement is to shift parameters stored in each register of the chain towards the output nodes 106, providing each parameter output at the output nodes 106 at the input nodes 105 will result in the original parameters being stored in the appropriate register once the scan chain arrangement has completed at least the same number of shifts as there are registers in the chain. Accordingly, a parameter fed back to the input will be shifted along the chain by the scan chain arrangement. With an appropriate number of shift actions, the parameter may be placed in the register it was stored in prior to the initiation of the scan process.

In one or more examples, the parameter of register 102N, 103N may be fed back to the input nodes 105 on a first shift action by the scan chain arrangement. In other examples, it may require more shift actions than there are registers in a chain to restore the or each chain of registers to its previous state before the scan-chain arrangement began its serial output of parameters. For example, the first parameter output by the scan chain arrangement may be stored in a buffer over one clock cycle (for example) prior to being fed back to the input nodes 105 on the next shift action. In such an example, it will require N+1 shifts by the scan chain arrangement to restore a chain of registers of N registers. Regardless of the number of shifts required, the feedback arrangement 107 provides for restoration of the parameters in the or each chain of registers as part of the scan process performed by the scan chain arrangement to read-out the parameters of the chain.

The apparatus 100 further comprises a checksum determination element 108. The checksum determination element 108 receives the signals from the output nodes 106. The checksum determination element 108 is configured to calculate a checksum of the parameters of the chain of registers provided at the output node by the scan chain arrangement for identification of changes to the parameters of the at least one chain of registers. Thus, the plurality of parameters upon which the checksum is calculated may comprise all of the parameters of one of the chains, a predefined part of the chain, a combination of parameters from two or more of the plurality of chains or any other combination of the registers that form the chains. In this example a single checksum is calculated for all of the registers 102A-N, 103 A-N in all of the chains of registers, although in other examples a checksum may be calculated on a different basis, such as for each chain.

The checksum determination element 108 may use any checksum determination function such as a longitudinal parity, longitudinal redundancy check, modular sum, Fletcher's checksum, Adler-32 or a cyclic redundancy check.

The determination of whether or not an unexpected change in the parameters of the registers has occurred may be performed by the checksum determination element or a hypervisor (not shown) which provides for control of at least the apparatus 100 or supervises the operation of the apparatus 100. Accordingly, in one or more examples, the checksum determination element 108 includes a memory for storing a previously calculated checksum, such as a most recent previously calculated checksum. The checksum determination element 108 includes a comparator for comparing a current checksum with the previously calculated checksum. If a difference is present, the checksum determination element 108 may provide or withhold signalling via output 110 to the hypervisor (i.e. a supervisory entity) to indicate the occurrence of a change in the checksum. In one or more examples the checksum determination element may provide signalling representative of the checksum it has calculated to the hypervisor via output 110. The hypervisor may then determine whether or not an unexpected change in the checksum, and therefore the parameters of the registers, has occurred.

On determination of an unexpected change to parameters due to a change in the checksum, the hypervisor may take action such as by providing for writing, to the plurality of registers, of the correct parameters. Figure 2 shows write logic 200 for writing to the registers of the register bank 101. In other examples, the hypervisor may reset the system of which the apparatus 100 forms part to reinitialise the register bank 101. The write logic 200 may be typically used to purposely change the register values during normal use. However, in this example it may also be used on identification of an unexpected change to restore the correct parameter(s).

The combination of determination of a checksum and the feedback to restore the state of the registers following a scan chain read out of the values provides a synergistic benefit of reducing bandwidth requirements between the apparatus 100 and a hypervisor such that SEU errors (or other error types) can be detected on short timescales with low hardware requirements. The feedback arrangement 107 obviates the need for the hypervisor to re-write the parameters to the registers following a scan chain read out and the determination of the checksum obviates the need to send the parameters (which may total many thousand) to the hypervisor. Accordingly, data flow from the hypervisor to the apparatus 100 and from the apparatus 100 to the hypervisor may be reduced while making efficient use of a scan-chain arrangement.

We also disclose a combination of the apparatus 100 and a hypervisor wherein determination of the occurrence of an error is determined by way of a checksum determination element of the apparatus 100 such that restorative action of the parameters may be initiated by the hypervisor. The hypervisor may reset or "reboot" the system of which the apparatus forms part or may re-write the correct parameters to the registers 102A-N, 103A-N.

Figure 2 additionally shows a register controlled block 201 comprising an electronic device configured to perform a predetermined task based on the parameters stored in at least one or more of the registers 102A-N, 103A-N of the at least one chain of registers 102, 103. The register controlled block may or may not form part of the apparatus 100. Nevertheless, the register controlled block uses the parameters stored in the registers to perform its function.

A production testing input 202 and a production testing output 203 is shown for inputting and outputting the parameters of the registers during production scan testing. It will be appreciated that the production testing input 202 and a production testing output 203 are not necessary for the determination of the occurrence of an SEU during the scan chain read-out and checksum determination described above.

Figure 1 and 2 show a register contents integrity test mode signal line 111 which may receive a signal from the hypervisor for initiation of the register contents integrity test mode. The register contents integrity test mode signal may provide for initiation of the shifting process of the scan chain arrangement and the resetting of the checksum determination element 108 ready for calculation of a fresh checksum. Figure 2 shows the register contents integrity test mode signal line being applied to an output pad 204. The output pad 204 may provide a connection to the hypervisor for transmission of the checksum or other signalling. The output pad 204 may comprise one pad or a plurality of pads.

In use, a hypervisor provides an application mode in which the parameters of the registers 102A-N, 103A-N are provided for control of one or more electronic devices, such as register controlled block 201. The hypervisor further provides a register contents integrity test mode in which the scan chain arrangement is configured to output the parameters for calculation of the checksum by the checksum determination element 108. For safety-critical applications, the determination of the checksum may be performed regularly. The register contents integrity test mode may be required to complete quickly in order not to severely interrupt operation of the electronic device for which the register bank 101 provides parameters.

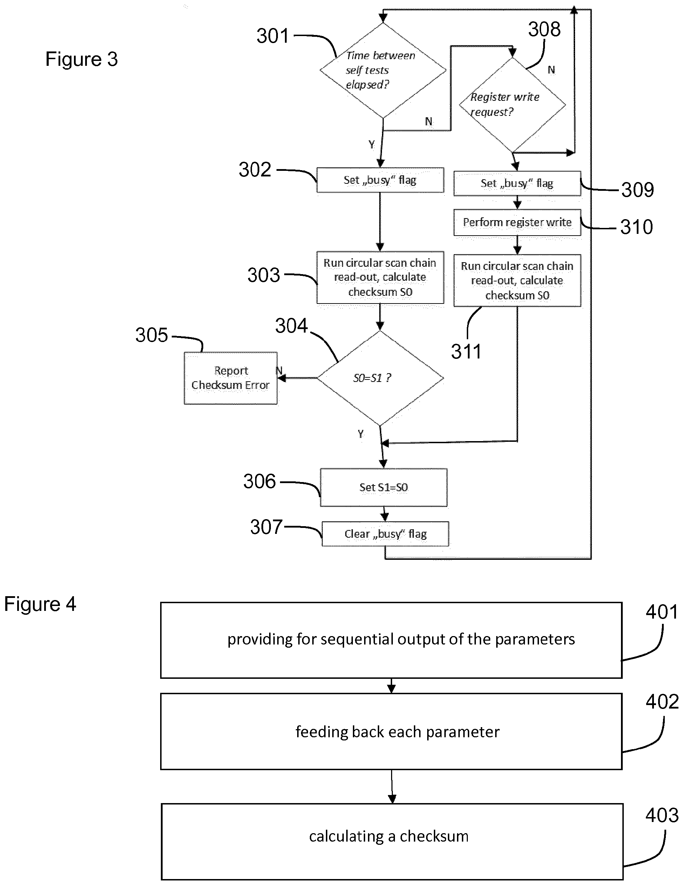

Figure 3 shows an example method of operation. At step 301, a hypervisor or the apparatus 100 may determine whether it is time to perform the register contents integrity test. A predetermined schedule of test periods may be referenced. If it is time, a busy flag is set at step 302 to indicate that the register contents integrity test mode is active. The busy flag may be used by the register controlled block 201 to determine when the parameters of the registers may be read. Step 303 shows the sending of the register contents integrity test mode signal to line 111. The register contents integrity test mode signal may activate the scan chain arrangement and reset the checksum determination element 108. The apparatus may be configured such that the signal provides for;
- placing all the registers 102A-N, 103A-N in a scan shift mode to allow for shifting of the parameters between registers;
- routing of a clock signal to the scan chain arrangement;
- reset the checksum generator;
- route the output of the checksum determination element 108 to the pad(s) 204 for transmission to the hypervisor;
- set the multiplexers of the scan chain arrangement to appropriately multiplex the parameters received from the chains.

The scan shift mode may be used during production testing as well as for register contents integrity testing described herein.

Step 304 shows a comparison (performed by the hypervisor in this example but may be performed by the apparatus 100) of the checksum received from the checksum determination element, S₀, with a previously calculated checksum, S₁. If the checksums S₀ and S₁ differ, the hypervisor may take a predetermined action shown as step 305. The predetermined action, as mentioned above, may include one or more of re-writing the parameters to the registers from a redundant store, and resetting the apparatus. Otherwise, at step 306, the hypervisor sets the checksum received from the checksum determination element as the previously calculated checksum, S₁ The reason for this action is explained below. Step 307 shows the busy flag being cleared and the apparatus returning to an application mode.

The parameters of the registers may need to be purposively changed from time to time. Such a change to the register values will be detected the next time the checksum determination element performs its calculation. Accordingly, the method may include the step 308 of determining whether the registers are to be written to. If so, the busy flag is set at step 309, the writing of one or more parameters to the registers is performed at step 310, such as by write logic 200 on the instruction of the hypervisor. The scan chain arrangement and checksum determination element are then activated similar to the register contents integrity test mode for calculation of a new checksum at step 311. The method then proceeds to step 306 where the previous checksum S₁ is updated. It will be appreciated that in other examples several checksums for two or more subsets of the registers of the register block 101 may be stored.

Figure 4 shows an example method of operation of the apparatus 100. The method comprises, for a register bank comprising at least one chain of registers the or each chain of registers comprising a plurality of registers serially connected in a chain, each register of the chain of registers configured to store a parameter in use, the chain of registers having an input node at a first end of the chain and an output node at an, opposed, second end of the chain,
providing 401 for sequential output, at the output node, of the parameters stored in the registers of the chain by way of sequentially shifting the parameters stored in each register of the chain to an adjacent register in the chain in a direction of the output node;
feeding back 402 each parameter provided at the output node to the input node thereby providing for restoration of the parameters stored in the chain of registers once all of the parameters of the chain have been output; and
calculating 403 a checksum of the parameters of the chain of registers provided at the output node for identification of changes to the parameters of the at least one chain of registers.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An apparatus (100) comprising:
a register bank (101) comprising at least one chain of registers (102, 103) comprising a plurality of registers (102A-N, 103A-N) serially connected in a chain, each register of the chain of registers configured to store a parameter in use, the or each chain of registers having an input node (105) at a first end of the chain and an output node (106) at an, opposed, second end of the chain, the register bank including a scan chain arrangement configured to provide for sequential output, at the output node, of the parameters stored in the registers of the chain by way of sequentially shifting the parameters stored in each register of the chain to an adjacent register in the chain in a direction of the output node;
a feedback arrangement (107) configured such that each parameter provided at the output node (106) is fed back to the input node (105) of that chain (102, 103) thereby providing for restoration of the parameters stored in the chain of registers once the scan chain arrangement has provided for output all of the parameters of the chain;
the apparatus being **characterised in that** it comprises:
a checksum determination element (108) configured to calculate a checksum upon a plurality of the parameters of the chain(s) of registers (102, 103) received from the output node (106) by the scan chain arrangement and comprising a comparator configured to compare the checksum to a previously calculated checksum stored in a memory of the checksum determination element for identification of changes to the parameters of the at least one chain of registers.

2. An apparatus (100) according to claim 1, wherein the checksum determination element (108) is configured to provide for communication of said checksum to a hypervisor for determination of a change in the checksum from a previously calculated checksum.

3. An apparatus (100) according to claim 1, wherein the checksum determination element (108) is configured to compare a calculated checksum with a previously calculated checksum for determination of a change to the parameters stored in the at least one chain of registers (102, 103) and, at least on detection of a change to the checksum, provide for sending of signalling to a hypervisor.

4. An apparatus (100) according to any preceding claim, wherein the apparatus includes at least one register controlled block (201) comprising an electronic device configured to perform a predetermined task based on the parameters stored in at least one or more of the registers (102A-N, 103A-N) of the at least one chain of registers (102, 103).

5. An apparatus (100) according to any preceding claim, wherein the register bank (101) includes a plurality of chains of registers (102, 103), the plurality of chains of registers connected together in parallel and wherein the scan chain arrangement is configured to provide a plurality of output signals at the output nodes (106) comprising the parameters of the registers (102A-N, 103A-N) of each of the plurality of chains of registers.

6. An apparatus (100) according to claim 5, wherein the plurality of scan chains have the same length in terms of the number of registers (102A-N, 103A-N) therein.

7. An apparatus (100) according to any preceding claim, wherein the registers (102A-N, 103A-N) comprise one or more of flip-flops, latches and dynamic storage elements.

8. An apparatus (100) according to any preceding claim, wherein the scan chain arrangement is configured to receive a clock signal for sequential output of the parameters of the at least one chain of registers (102, 103).

9. An apparatus according to claim 5, wherein the checksum determination element (108) is configured to determine one or more of;
a checksum for each chain of registers (102, 103); and
a checksum for the registers of a plurality of chains of registers (102, 103).

10. An apparatus (100) according to any preceding claim, wherein the apparatus is configured to, on receipt of a register contents integrity test signal, reset the checksum determination element (108) for calculation of a checksum based on current parameters of the register bank (101) and initiate the scan chain arrangement for providing, sequentially, the parameters of the at least one chain of registers (102, 103) to the scan chain arrangement.

11. An apparatus (100) according to any preceding claim, wherein the apparatus is configured to provide an application mode in which the parameters of the registers (102A-N, 103A-N) are provided for control of one or more electronic devices; and a register contents integrity test mode in which the scan chain arrangement is configured to output the parameters for calculation of the checksum by the checksum determination element (108).

12. An apparatus (100) according to claim 1, wherein the apparatus includes a register write element configured to provide for writing of parameters to the registers of the at least one chain of registers (102, 103), the register write element configured to write to the registers without use of the scan chain arrangement.

13. A system comprising the apparatus (100) according to claim 11 and a hypervisor, wherein the apparatus is controlled by the hypervisor, the hypervisor configured to switch the apparatus between the application mode and the register content integrity test mode, wherein during the register content integrity test mode, the apparatus is configured to send the checksum determined by the checksum determination element (108) to the hypervisor and, based on a determination by the hypervisor that the checksum has unexpectedly changed from a previously calculated checksum, the hypervisor configured to provide for writing of one or more parameters to the registers (102A-N, 103A-N).

14. A method for a register bank (101) comprising at least one chain of registers (102, 103) the or each chain of registers comprising a plurality of registers (102A-N, 103A-N) serially connected in a chain, each register of the chain of registers configured to store a parameter in use, the chain of registers having an input node (105) at a first end of the chain and an output node (106) at an, opposed, second end of the chain,
providing (401) for sequential output, at the output node, of the parameters stored in the registers of the chain by way of sequentially shifting the parameters stored in each register of the chain to an adjacent register in the chain in a direction of the output node;
feeding (402) back each parameter provided at the output node to the input node thereby providing for restoration of the parameters stored in the chain of registers once all of the parameters of the chain have been output;
the method being **characterised in that** it comprises:
calculating (403) a checksum upon a plurality of the parameters of the chain of registers (102, 103) received from the output node (106), and comparing the checksum to a previously calculated checksum for identification of changes to the parameters of the at least one chain of registers.

15. An electronic device including the apparatus (100) of claims 1 to 12.

## Patentansprüche

1. Vorrichtung (100), die Folgendes umfasst:
eine Registerbank (101), die wenigstens eine Kette von Registern (102, 103) umfasst, die mehrere Register (102A-N, 103A-N) umfasst, die in einer Kette in Reihe geschaltet sind, wobei jedes Register der Kette von Registern konfiguriert ist, einen benutzten Parameter zu speichern, wobei die oder jede Kette von Registern einen Eingangsknoten (105) an einem ersten Ende der Kette und einen Ausgangsknoten (106) an einem gegenüberliegenden, zweiten Ende der Kette aufweist, wobei die Registerbank eine Abtastkettenanordnung enthält, die konfiguriert ist, über das sequentielle Verschieben der in jedem Register der Kette gespeicherten Parameter zu einem benachbarten Register in der Kette in einer Richtung des Ausgangsknotens am Ausgangsknoten eine sequentielle Ausgabe der Parameter bereitzustellen, die in den Registern der Kette gespeichert sind;
eine Rückkopplungsanordnung (107), die so konfiguriert ist, dass jeder an dem Ausgangsknoten (106) bereitgestellte Parameter zu dem Eingangsknoten (105) dieser Kette (102, 103) rückgekoppelt wird, wobei dadurch die Wiederherstellung der in der Kette von Registern gespeicherten Parameter bereitgestellt wird, sobald die Abtastkettenanordnung die Ausgabe aller Parameter der Kette bereitgestellt hat;
wobei die Vorrichtung **dadurch gekennzeichnet ist, dass** sie Folgendes umfasst:
ein Prüfsummenbestimmungselement (108), das konfiguriert ist, eine Prüfsumme an mehreren der Parameter der Kette(n) von Registern (102, 103) zu berechnen, die durch die Abtastkettenanordnung von dem Ausgangsknoten (106) empfangen werden, und die einen Komparator umfasst, der konfiguriert ist, die Prüfsumme mit einer vorher berechneten Prüfsumme, die in einem Speicher des Prüfsummenbestimmungselements gespeichert ist, zur Identifikation der Änderungen der Parameter der wenigstens einen Kette von Registern zu vergleichen.

2. Vorrichtung (100) nach Anspruch 1, wobei das Prüfsummenbestimmungselement (108) konfiguriert ist, die Übertragung der Prüfsumme zu einem Hypervisor zur Bestimmung einer Änderung der Prüfsumme von einer vorher berechneten Prüfsumme bereitzustellen.

3. Vorrichtung (100) nach Anspruch 1, wobei das Prüfsummenbestimmungselement (108) konfiguriert ist, eine berechnete Prüfsumme mit einer vorher berechneten Prüfsumme zur Bestimmung einer Änderung der Parameter, die in der wenigstens einen Kette von Registern (102, 103) gespeichert sind, zu vergleichen und wenigstens bei einer Detektion einer Änderung der Prüfsumme das Senden einer Signalisierung an einen Hypervisor bereitzustellen.

4. Vorrichtung (100) nach einem vorhergehenden Anspruch, wobei die Vorrichtung wenigstens einen registergesteuerten Block (201) enthält, der eine elektronische Vorrichtung umfasst, die konfiguriert ist, eine vorgegebene Aufgabe basierend auf den Parametern auszuführen, die in wenigstens einem oder mehreren der Register (102A-N, 103A-N) der wenigstens einen Kette von Registern (102, 103) gespeichert sind.

5. Vorrichtung (100) nach einem vorhergehenden Anspruch, wobei die Registerbank (101) mehrere Ketten von Registern (102, 103) enthält, wobei die mehreren Ketten von Registern miteinander parallelgeschaltet sind und wobei die Abtastkettenanordnung konfiguriert ist, an den Ausgangsknoten (106) mehrere Ausgangssignale bereitzustellen, die die Parameter der Register (102A-N, 103A-N) jeder der mehreren Ketten von Registern umfassen.

6. Vorrichtung (100) nach Anspruch 5, wobei die mehreren Abtastketten die gleiche Länge hinsichtlich der Anzahl von Registern (102A-N, 103A-N) darin aufweisen.

7. Vorrichtung (100) nach einem vorhergehenden Anspruch, wobei die Register (102A-N, 103A-N) eines oder mehrere der Folgenden umfassen: Flipflops, Auffangspeicher und dynamische Speicherelemente.

8. Vorrichtung (100) nach einem vorhergehenden Anspruch, wobei die Abtastkettenanordnung konfiguriert ist, ein Taktsignal für die sequentielle Ausgabe der Parameter der wenigstens einen Kette von Registern (102, 103) zu empfangen.

9. Vorrichtung nach Anspruch 5, wobei das Prüfsummenbestimmungselement (108) konfiguriert ist, eines oder mehrere der Folgenden zu bestimmen:
eine Prüfsumme für jede Kette von Registern (102, 103); und
eine Prüfsumme für die Register mehrerer Ketten von Registern (102, 103).

10. Vorrichtung (100) nach einem vorhergehenden Anspruch, wobei die Vorrichtung konfiguriert ist, beim Empfang eines Registerinhalte-Integritätstestsignals das Prüfsummenelement (108) zur Berechnung einer Prüfsumme basierend auf den aktuellen Parametern der Registerbank (101) zurückzusetzen und die Abtastkettenanordnung zum sequentiellen Bereitstellen der Parameter der wenigstens einen Kette von Registern (102, 103) der Abtastkettenanordnung zu starten.

11. Vorrichtung (100) nach einem vorhergehenden Anspruch, wobei die Vorrichtung konfiguriert ist, eine Anwendungsbetriebsart, bei der die Parameter der Register (102A-N, 103A-N) zur Steuerung einer oder mehrerer elektronischen Vorrichtungen bereitgestellt werden; und eine Registerinhalte-Integritätstestbetriebsart, bei der die Abtastkettenanordnung konfiguriert ist, die Parameter zur Berechnung der Prüfsumme durch das Prüfsummenbestimmungselement (108) auszugeben, bereitzustellen.

12. Vorrichtung (100) nach Anspruch 1, wobei die Vorrichtung ein Registerschreibelement enthält, das konfiguriert ist, das Schreiben von Parametern in die Register der wenigstens einen Kette von Registern (102, 103) bereitzustellen, wobei das Registerschreibelement konfiguriert ist, ohne die Verwendung der Abtastkettenanordnung in die Register zu schreiben.

13. System, das die Vorrichtung (100) nach Anspruch 11 und einen Hypervisor umfasst, wobei die Vorrichtung durch den Hypervisor gesteuert ist, wobei der Hypervisor konfiguriert ist, die Vorrichtung zwischen der Anwendungsbetriebsart und der Registerinhalte-Integritätstestbetriebsart umzuschalten, wobei während der Registerinhalte-Integritätstestbetriebsart die Vorrichtung konfiguriert ist, die durch das Prüfsummenbestimmungselement (108) bestimmte Prüfsumme an den Hypervisor zu senden, und der Hypervisor konfiguriert ist, das Schreiben eines oder mehrerer Parameter in die Register (102A-N, 103A-N) basierend auf einer Bestimmung durch den Hypervisor, dass sich die Prüfsumme unerwartet von einer vorher berechneten Prüfsumme geändert hat, bereitzustellen.

14. Verfahren für eine Registerbank (101), die wenigstens eine Kette von Registern (102, 103) umfasst, wobei die oder jede Kette von Registern mehrere Register (102A-N, 103A-N) umfasst, die in einer Kette in Reihe geschaltet sind, wobei jedes Register der Kette von Registern konfiguriert ist, einen benutzten Parameter zu speichern, wobei die Kette von Registern einen Eingangsknoten (105) an einem ersten Ende der Kette und einen Ausgangsknoten (106) an einem gegenüberliegenden, zweiten Ende der Kette aufweist,
Bereitstellen (401) der sequentiellen Ausgabe am Ausgangsknoten der in den Registern der Kette gespeicherten Parameter durch das sequentielle Verschieben der in jedem Register der Kette gespeicherten Parameter zu einem benachbarten Register in der Kette in einer Richtung des Ausgangsknotens;
Rückkoppeln (402) jedes am Ausgangsknoten bereitgestellten Parameters zum Eingangsknoten, dadurch Bereitstellen der Wiederherstellung der in der Kette von Registern gespeicherten Parameter, sobald alle Parameter der Kette ausgegeben worden sind;
wobei das Verfahren **dadurch gekennzeichnet ist, dass** es Folgendes umfasst:
Berechnen (403) einer Prüfsumme an mehreren der von dem Ausgangsknoten (106) empfangenen Parameter der Kette von Registern (102, 103) und Vergleichen der Prüfsumme mit einer vorher berechneten Prüfsumme zur Identifikation von Änderungen der Parameter der wenigstens einen Kette von Registern.

15. Elektronische Vorrichtung, die die Vorrichtung (100) nach den Ansprüchen 1 bis 12 enthält.

## Revendications

1. Appareil (100) comprenant:
une banque de registres (101) comprenant au moins une chaîne de registres (102, 103) comprenant une pluralité de registres (102A-N, 103A-N) connectés en série dans une chaîne, chaque registre de la chaîne de registres étant configuré pour stocker un paramètre en cours d'utilisation, la ou chaque chaîne de registres ayant un nœud d'entrée (105) à une première extrémité de la chaîne et un nœud de sortie (106) à une seconde extrémité opposée de la chaîne, la banque de registres comprenant un agencement de chaîne de balayage configuré pour fournir une sortie séquentielle, au niveau du nœud de sortie, des paramètres stockés dans les registres de la chaîne par l'intermédiaire d'un décalage séquentiel des paramètres stockés dans chaque registre de la chaîne vers un registre adjacent de la chaîne dans une direction du nœud de sortie ;
un agencement de rétroaction (107) configuré de manière à ce que chaque paramètre fourni au niveau du nœud de sortie (106) soit renvoyé au nœud d'entrée (105) de cette chaîne (102, 103), permettant ainsi de restaurer les paramètres stockés dans la chaîne de registres une fois que l'agencement de chaîne de balayage a fourni en sortie tous les paramètres de la chaîne ;
l'appareil étant **caractérisé en ce qu'**il comprend :
un élément de détermination de somme de contrôle (108) configuré pour calculer une somme de contrôle sur une pluralité de paramètres de la ou des chaînes de registres (102, 103) reçus du nœud de sortie (106) par l'agencement de chaîne de balayage et comprenant un comparateur configuré pour comparer la somme de contrôle à une somme de contrôle précédemment calculée stockée dans une mémoire de l'élément de détermination de somme de contrôle pour l'identification de changements des paramètres de l'au moins une chaîne de registres.

2. Appareil (100) selon la revendication 1, dans lequel l'élément de détermination de somme de contrôle (108) est configuré pour permettre la communication de ladite somme de contrôle à un hyperviseur pour la détermination d'un changement dans la somme de contrôle par rapport à une somme de contrôle calculée précédemment.

3. Appareil (100) selon la revendication 1, dans lequel l'élément de détermination de somme de contrôle (108) est configuré pour comparer une somme de contrôle calculée à une somme de contrôle calculée précédemment pour la détermination d'un changement des paramètres stockés dans l'au moins une chaîne de registres (102, 103) et, au moins, lors de la détection d'un changement de la somme de contrôle, procéder à l'envoi d'une signalisation à un hyperviseur.

4. Appareil (100) selon l'une quelconque des revendications précédentes, dans lequel l'appareil comprend au moins un bloc contrôlé de registre (201) comprenant un dispositif électronique configuré pour exécuter une tâche prédéterminée sur la base des paramètres stockés dans au moins un ou plusieurs des registres (102A-N, 103A-N) de l'au moins une chaîne de registres (102, 103).

5. Appareil (100) selon l'une quelconque des revendications précédentes, dans lequel la banque de registres (101) comprend une pluralité de chaînes de registres (102, 103), la pluralité de chaînes de registres étant connectées ensemble en parallèle, et où l'agencement de chaînes de balayage est configuré pour fournir une pluralité de signaux de sortie aux nœuds de sortie (106) comprenant les paramètres des registres (102A-N, 103A-N) de chacune de la pluralité de chaînes de registres.

6. Appareil (100) selon la revendication 5, dans lequel la pluralité de chaînes de balayage ont la même longueur en termes de nombre de registres (102A-N, 103A-N) dans celles-ci.

7. Appareil (100) selon l'une quelconque des revendications précédentes, dans lequel les registres (102A-N, 103A-N) comprennent une ou plusieurs bascules, verrous et éléments de stockage dynamique.

8. Appareil (100) selon l'une quelconque des revendications précédentes, dans lequel l'agencement de chaîne de balayage est configuré pour recevoir un signal d'horloge pour la sortie séquentielle des paramètres de l'au moins une chaîne de registres (102, 103) .

9. Appareil selon la revendication 5, dans lequel l'élément de détermination de somme de contrôle (108) est configuré pour déterminer un ou plusieurs des éléments suivants ;
une somme de contrôle pour chaque chaîne de registres (102, 103) ; et
une somme de contrôle pour les registres d'une pluralité de chaînes de registres (102, 103).

10. Appareil (100) selon l'une quelconque des revendications précédentes, dans lequel l'appareil est configuré pour, à la réception d'un signal de test d'intégrité de contenu de registre, réinitialiser l'élément de détermination de somme de contrôle (108) pour le calcul d'une somme de contrôle sur la base des paramètres courants de la banque de registres (101) et initier l'agencement de chaîne de balayage pour fournir, de manière séquentielle, les paramètres de l'au moins une chaîne de registres (102, 103) à l'agencement de chaîne de balayage.

11. Appareil (100) selon l'une quelconque des revendications précédentes, dans lequel l'appareil est configuré pour fournir un mode d'application dans lequel les paramètres des registres (102A-N, 103A-N) sont fournis pour le contrôle d'un ou plusieurs dispositifs électroniques ; et un mode de test d'intégrité de contenu de registre dans lequel l'agencement de chaîne de balayage est configuré pour sortir les paramètres pour le calcul de la somme de contrôle par l'élément de détermination de somme de contrôle (108).

12. Appareil (100) selon la revendication 1, dans lequel l'appareil comprend un élément d'écriture de registre configuré pour permettre l'écriture de paramètres dans les registres de l'au moins une chaîne de registres (102, 103), l'élément d'écriture de registre étant configuré pour écrire dans les registres sans utiliser l'agencement de chaîne de balayage.

13. Système comprenant l'appareil (100) selon la revendication 11 et un hyperviseur, où l'appareil est contrôlé par l'hyperviseur, l'hyperviseur étant configuré pour commuter l'appareil entre le mode application et le mode de test d'intégrité de contenu de registre, où, pendant le mode test d'intégrité de contenu de registre, l'appareil est configuré pour envoyer la somme de contrôle déterminée par l'élément de détermination de somme de contrôle (108) à l'hyperviseur et, sur la base d'une détermination par l'hyperviseur que la somme de contrôle a changé de manière inattendue par rapport à une somme de contrôle calculée précédemment, l'hyperviseur est configuré pour permettre l'écriture d'un ou plusieurs paramètres dans les registres (102A-N, 103A-N).

14. Procédé pour une banque de registres (101) comprenant au moins une chaîne de registres (102, 103), la ou chaque chaîne de registres comprenant une pluralité de registres (102A-N, 103A-N) connectés en série dans une chaîne, chaque registre de la chaîne de registres étant configuré pour stocker un paramètre en cours d'utilisation, la chaîne de registres ayant un nœud d'entrée (105) à une première extrémité de la chaîne et un nœud de sortie (106) à une seconde extrémité opposée de la chaîne,
fournir (401) une sortie séquentielle, au niveau du nœud de sortie, des paramètres stockés dans les registres de la chaîne en décalant de manière séquentielle les paramètres stockés dans chaque registre de la chaîne vers un registre adjacent de la chaîne dans une direction du nœud de sortie ;
renvoyer (402) chaque paramètre fourni au nœud de sortie vers le nœud d'entrée, permettant ainsi de restaurer les paramètres stockés dans la chaîne de registres une fois que tous les paramètres de la chaîne ont été sortis ;
le procédé étant **caractérisé en ce qu'**il comprend les étapes suivantes :
calculer (403) une somme de contrôle sur une pluralité de paramètres de la chaîne de registres (102, 103) reçus du nœud de sortie (106), et comparer la somme de contrôle à une somme de contrôle calculée précédemment pour l'identification de changements des paramètres de l'au moins une chaîne de registres.

15. Dispositif électronique comprenant l'appareil (100) des revendications 1 à 12.
